# EUROPEAN PATENT APPLICATION

(11) **EP 4 711 495 A1**
(43) Date of publication of application: **18.03.2026**
(21) Application number: 24200448.9
(22) Date of filing: 16.09.2024
(51) Int. Cl.: C25B 1/04, C25B 9/60, C25B 9/65, C25B 9/70

(54) **ELECTROLYSER CELL STACK**

(71) Applicant: AVL List GmbH, 8020 Graz (AT); AVL Fuel Cell Canada Inc, Burnaby, British Columbia V5A 4W2 (CA)
(72) Inventor: Thomas, Owen, Vancouver BC, V6E 4V3 (CA); Mann, Bhagwant Tejpaul, Burnaby, 5980 (CA); Hsieh, Yvonne, Burnaby, V5C1W5 (CA); Raibeck, Laura, Vancouver, V5N 4G2 (CA)
(74) Representative: Gamper, Bettina

(57) **Abstract**

The present invention relates to an electrolyser cell stack (100) for producing a hydrogen-based e-fuel, including an electrochemical system (10) with a plurality of electrolyser cells for an electrochemical reaction of water with electric power, an electrical system (20) for supplying electric power to the stacked electrolyser cells, and a compression system (30) with compression plates (33) for compressing at least the electrochemical system (10) in a stacking direction (D). According to the invention, the electrochemical system (10) is divided into at least two parallel stacked sub-stacks (11) of the electrolyser cells arranged within an area (A) of the compression plates (33), for a common compression of all sub-stacks (11) by the same compression system (30).

## Description

The present application relates to an electrolyser cell stack for producing a hydrogen-based e-fuel, in particular to a new design of such electrolyser cell stack.

The electrolyser cell stack according to the invention is suitable for industrial applications and plant constructions in the field of e-fuel production, i.e., a hydrogen-based e-fuel that is produced from water and electric power, preferably supplied by a regenerative power source.

For industrial applications, electrolysers are built-up by stacks of large-scaled electrolyser cells each providing a large active area for the electrochemical reaction of water for achieving a correspondingly large yield of hydrogen as the reaction product of interest. This common design of plant construction implies to use a similar design of electrolyser units or fuel cell units used in applications of smaller power classes or performance requirements by scaling up the size of outer dimensions of the stack and the active area of each electrolyser cell within the stack.

Due to individually customized or at least rare components produced in small numbers, overall costs before the launch as well as maintenance of such large-scale systems are comparatively much higher than for smaller scaled systems, as has become apparent from other types of electrochemical systems, e.g., mass-produced fuel cells for a variety of applications. However, not only the production figures, but also different challenging factors in the tasks of manufacturing, tooling, as well as shipping and installation handling become complicated and expensive when simply scaling up a previous design to larger dimensions as required in plant construction of industrial use.

It is an object of the invention to overcome the described problems in the state of art. More particular, it is an object of the invention to provide a technique that enables a reduction of costs or efforts in manufacturing, shipping or installation of large-scaled electrolyser cell stacks having dimensions for plant construction of industrial use.

The object is solved by the design of an electrolyser cell stack having the features of claim 1. Further features and details of the invention result from the dependent claims, the specification, and the drawings.

The electrolyser cell stack according to the invention serves for producing hydrogen, especially a hydrogen-based e-fuel. For this purpose, the electrolyser cell stack comprises an electrochemical system as a functionally essential active part of the electrolyser cell stack including sub-components of a unit cell, like membrane electrode assemblies (MEAs), bipolar plates, fluid flow fields, like supply channels or reservoirs for water, discharge channels for product gases etc. The electrolyser cell stack further comprises an electrical system for supplying electric power to the stacked electrolyser cells and a compression system for mechanically compressing from an outside, all components of the electrochemical system and eventually the components of the electrical system in a stacking direction.

The electrochemical system includes a plurality of electrolyser cells, wherein each electrolyser cell is stacked in the stacking direction and extends in parallel to a stacking plane which is substantially orthogonal to the stacking direction. The electrical system includes at least one pair of bus plates extending in parallel to the stacking plane, wherein each bus plate is arranged in contact with the electrolyser cells on one of opposing sides in the stacking direction. The compression system includes at least one pair of compression plates extending in parallel to the stacking plane, wherein each compression plate is arranged outwards of at least the electrochemical system on one of opposing sides in the stacking direction.

According to the invention, the electrochemical system is divided into at least two or preferably a larger number of parallel stacked sub-stacks of the electrolyser cells. All sub-stacks are arranged within an area of the at least one pair of compression plates in parallel to the stacking plane, which means that, with respect to the stacking plane, the electrolyser cells of each of the sub-stacks merely take-up a fraction of the area of the compression plates, or in other words, take-up a fraction of the outer dimensions of the whole electrolyser cell stack. On the other side, again with respect to the stacking plane, the areas of stacked electrolyser cells of the sub-stacks, i.e., the outer dimensions of all sub-stacks together, preferably fill out almost all of the plane area of the compression plates that corresponds to the outer dimensions of the whole electrolyser cell stack. This design enables a common compression of all of the at least two parallel stacked sub-stacks by the same compression system, more particular, by the same pair of compression plates.

Hence, for the first time, the invention proposes to down-size and multiply the components of a unit cell of the electrolyser cells, i.e., components of the electrochemical system, while keeping components of the compression system and eventually the electrical system or an isolation system on up-sized dimensions of industrial use appropriate scale. This means, a commonly known electrolyser cell stack for plant construction remains at large-scale, but merely an electrochemical active unit cell which forms the scheme of all redundantly stacked electrolyser cells in the stack shrinks to smaller size. At the same time, a higher number of such smaller redundant electrolyser cells compensates for loss of active area of each cell and for corresponding output performance of the entire system.

In other words, compared to a common design of a large-scaled electrolyser cell stack, where the active area of a unit cell in parallel to a staking plane substantially equals to the dimensions of the whole electrolyser cell stack in parallel to the staking plane, the invention defines a new design ratio between said parameters. According to the invention, this new design ration defines a smaller active area of each unit cell to a parallel aligned area determined by outer dimensions of the whole electrolyser cell stack. Such outer dimensions are defined by an outermost part or sub-system of the electrolyser cell stack, which is usually a compression system for compressing all active components of the stack into a firm electrical contact in stacking direction.

As a first advantage of the invention, all sub-components of a unit cell including the membrane electrode assembly, bipolar plates, interface plates, seals etc. become smaller in size and require higher production figures. Higher production figures of redundant identical or repeating parts having smaller active area enhance exploitations of machines and investments of a production line. The smaller size allows for the employment of tools, forms, or flow designs readily available from production of common electrolyser cell or fuel cell products.

In a second advantage of the invention, the manual handling of smaller and lighter electrolyser cells during installation of the electrolyser cell stack in a plant construction becomes easier. The same applies to the shipment of smaller and lighter electrolyser cells, where special requirements and handling efforts for over-size transportation on road or railway, as commonly known for customized parts of plant construction, will be omitted.

Summarizing the afore-mentioned advantageous aspects, the design according to the invention proclaims a more economical manufacturing, shipping and assembling of the functionally essential part of the electrolyser cell stack, i.e., at least all of the redundant unit cell components of the electrochemical system.

As a third advantage of the invention, also the maintenance of an industrial electrolyser system including the electrolyser cell stack of the design according to the invention benefits from cost reduction. In case of requirement of spare parts for the electrolyser cell stack, the above advantageous aspects of production costs, shipping and potential manual handling of spare parts by hands of technical staff during maintenance work likewise apply in favor of maintenance costs, as well as availability and duration of replacements when it comes to technically forced downtimes of the industrial electrolyser system.

As a fourth advantage, the structural design with respect to the compression system remains simplified by essentially comprising only one pair of compression plates and one compression mechanism for compressing all sub-stacks evenly and at the same time. As a relativising remark, it is noted that those parts of the electrolyser cell stack that remain on large scale in the design according to the invention, belong to the less functional critical components of the electric system and the compression system. Such components like bus plates or compression plates are rather simple mechanical parts that usually last for a life span of a system and that can be preferably sourced or customized by a local metal processing company providing services at the destination of plant construction.

According to an advantageous further feature of the invention, all of the at least two parallel stacked sub-stacks are arranged in a row or in an array of sub-stacks distributed within the area of the at least one pair of compression plates in parallel to the stacking plane. With this arrangement, a preferable square or rectangular shape and corresponding active area of the electrolyser cells, i.e., unit cells may effectively fill out all of the area of the commonly rectangular electrolyser cell stack, which is intentionally the same area as provided by the compression plates.

According to an advantageous further feature of the invention, a plurality of tensioning means, in particular bolts, extend between the compression plates in the stacking direction, for tightening the compression plates towards each other; and the plurality of bolts is arranged in a surrounding region surrounding all of the at least two sub-stacks within the area of the at least one pair of compression plates in parallel to the stacking plane, and, preferably, the plurality of tensioning means is also further arranged in at least one intermediate region formed between adjacently facing sides of the at least two parallel-stacked sub-stacks within the area of the at least one pair of compression plates in parallel to the stacking plane. This means, compared to a design involving a pair of compression plates for an arrangement of one single sub-stack or a small number of sub-stacks that is limited to a fixation of bolts around the four sides of a rectangular stack only, the proposed design proposes intermediate regions accepting bolts between preferably all of the sub-stacks. This results in an essentially enhanced flattening of compression plates 33 during compression and a more consistently even distribution of compression across all of the sub-stacks, particularly compared to the design of a large and bolt-free active area of one large single stack.

According to an advantageous further feature of the invention, at least one bus plate of the at least one pair of bus plates extends across all of the at least two sub-stacks in parallel to the stacking plane, for electrically connecting the at least two sub-stacks in parallel. By means of this feature, similar to the concept of the compression plate, the provision of only one bus plate on one or on each side of the whole stack for electrically contacting the electrolyser cells of all sub-stacks, simplifies the structural design of at least the electrical system. In addition, this feature enables an electrical circuit configuration of a parallel connection of the sub-stacks.

According to an advantageous further feature of the invention, at least one bus plate of the at least one pair of bus plates is segmented, wherein each segment of bus plate is arranged in contact with one sub-stack of the at least two sub-stacks, for individually supplying electric power to the at least two sub-stacks. This feature can also be combined with the previous mentioned feature, i.e., a design featuring one common bus plate on one side and a segmented bus plate on the other side of the stacking direction. The segmented bus plate with one segment assigned to each sub-stack enables a control and monitoring of at least electrical parameters for each subs-stack individually.

According to an advantageous further feature of the invention, the electrical system comprises switchable electrical contacts, each switchable electrical contact being arranged in contact with one or two of the segments of bus plate, for supplying electric power to the at least two sub-stacks in a parallel connection or a series connection. This feature allows, in a parallel circuit, to selectively operate each of the sub-stacks. In case of a malfunction of one particular sub-stack, said sub-stack can be deactivated from operation by shutting down the supply of electric power by means of such individually assigned electric switch. This feature also allows, in a series circuit, to operate all the sub-stacks or to operate a selected number of sub-stacks at lower current and higher overall voltage.

According to an advantageous further feature of the invention, the at least one pair of bus plates is segmented, wherein at least two segments of bus plate are each arranged in contact to two adjacent sub-stacks of the at least two sub-stacks in alternating order of opposing sides in the stacking direction, for electrically connecting the at least two sub-stacks in series. This means that every pair of adjacently arranged sub-stacks is electrically connected on one of opposing sides in the stacking direction by means of one segment of bus plate, wherein one next pair of adjacently arranged sub-stacks containing one common sub-stack with the previous pair, is electrically connected on the other of opposing sides by means of another segment of bus plate. This feature enables an electric circuit configuration of a serial connection of the sub-stacks. The operation of sub-stacks in a series configuration means lower current at higher voltage, which allows for smaller dimensions of current conducting cross-sections in components of the electrical system and lower costs.

According to an advantageous further feature of the invention, the electrolyser cell stack comprises an isolation system having at least one pair of isolator plates extending in parallel to the stacking plane, each isolator plate being arranged between at least parts of the electrical system and the electrochemical system and/or between at least parts of the electrical system and the compression system on one of opposing sides in the stacking direction, for at least partially electrically isolating the electrical system against parts of the electrolyser cell stack. This feature supports prevention of electric short-circuits within the whole structure of the electrolyser cell stack, depending on the materials and its electrical properties used for the compression plates or other parts of the electrolyser cell stack.

According to an advantageous further feature of the invention, at least one isolator plate of the at least one pair of isolator plates extends across all of the at least two sub-stacks in parallel to the stacking plane, for commonly isolating the electrical system against parts of the electrolyser cell stack. These regions include overlapping areas between a bus plate and an electrolyser cell of a sub-stack beside or around a defined electrical contact for power supply between the bus plate and the sub-stack. By means of this feature, similar to the concept of the compression plate and one of the concepts for the bus plate, the provision of only one isolator plate on one or on each side of the whole stack, essentially simplifies the structural design of at least the isolation system.

According to an advantageous further feature of the invention, at least one isolator plate of the at least one pair of isolator plates is segmented, wherein each segment of isolator plate is arranged between segments of bus plate of two adjacent sub-stacks of the at least two sub-stacks, for individually isolating the electrical system in regions at each of the at least two sub-stacks. These regions again include overlapping areas between a bus plate and an electrolyser cell of a sub-stack beside or around a defined electrical contact for power supply between the bus plate and the sub-stack. This feature provides an alternative and less simple design of an isolator plate but allows for a more individual isolation pattern and a more focused employment of materials.

Further objectives, advantages, features and applications of the present invention arise from the following description of the exemplary embodiments with reference to the drawings. In the drawing:
- Fig. 1: shows a schematic cross-section in a side view of an electrolyser cell stack according to a first embodiment of the invention;
- Fig. 2: shows a schematic cross-section in a side view of an electrolyser cell stack according to a second embodiment of the invention;
- Fig. 3: shows a schematic cross-section in a side view of an electrolyser cell stack according to a third embodiment of the invention;
- Fig. 4: shows a schematic cross-section in a side view of an electrolyser cell stack according to a fourth embodiment of the invention;
- Fig. 5: shows a schematic cross-section in a top view of an electrolyser cell stack according to one of the previous embodiments of the invention; and
- Fig. 6: shows a schematic cross-section in a side view of a known electrolyser cell stack design in the state of art.

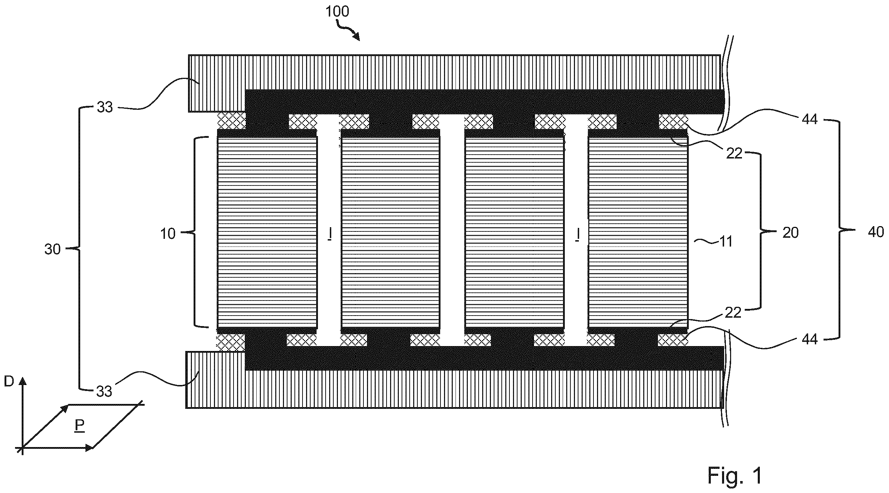

Fig. 1 depicts a first embodiment of an electrolyser cell stack 100 for producing a hydrogen-based fuel from water by supplying electric power in performance of a commonly known electrochemical reaction of an electrolyser that splits water into hydrogen and oxygen. Said reaction takes place on active surfaces of a membrane electrode assembly (MEA) which forms part of a generic unit cell or a redundantly stacked electrolyser cell. A plurality of electrolyser cells forms part of a repeating sub-stack 11 which is a smaller stack of electrolyser cells within the whole electrolyser cell stack 100. All of the sub-stacks 11 are stacked in parallel to a stacking direction D, while the staked electrolyser cells of sub-stacks 11 are all aligned in parallel to a stacking plane P. The sub-stacks 11 are arranged in a regular array with respect to the stacking plane P with the sub-stacks having small intermediate regions I in-between. The sub-stacks 11 with its electrolyser cells including further components like fluid channels for water supply or product gas discharge form an electrochemical system 10 of the electrolyser cell stack 100.

The sub-stacks 11 are supplied with electric power by an electrical system 20. The electrical system comprises bus bars or wiring for distributing the power supply across the stacking plane P to bus plates 22 arranged in contact with the outermost electrolyser cells on both end-sides of each sub-stack 11 in the stacking direction D. In the shown first embodiment, two bus plates 22 on both sides in stacking direction D, are segmented at the intermediate regions I so that each sub-stack 11 is electrically contacted by an assigned pair of segments of bus plate 22.

The segmentation of bus plates 22 on the upper and lower side structurally enable an individual monitoring of each sub-stack 11, in case of provision of further, individually assigned sensors for voltage, current, temperature or the like (not depicted). Furthermore, the segmentation of bus plates 22 structurally enables an independent power supply for each sub-stack 11, in case of provision of further individual leads and electrical switches (not depicted) assigned to each of the sub-stacks 11 on part of the electrical system 20. Such switchable configuration of the electrical system 20 including the segmented bus plates 22 allows for shutting down power supply to individual sub-stacks 11 by different intentions, like avoidance of malfunction on a particular critical sub-stack 11, or control of a part-load operation of the electrolyser cell stack 100 based on a predetermined partial number of operated sub-stacks 11 out of a total number of sub-stacks 11.

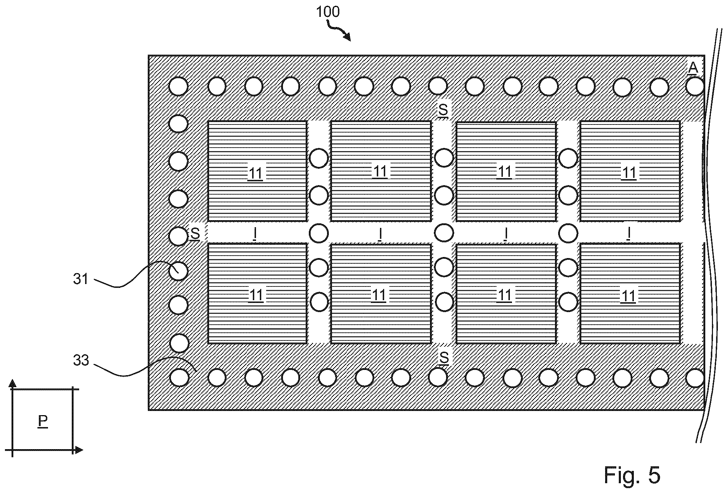

The electrolyser cell stack 100 further comprises a pair of compression plates 33. The compression plates 33 are made from a rigid material as e.g. a metal plate of sufficient thickness, or a flat cast iron part with a reinforcement structure on the outer side. The compression plates 33 extend across substantially all outer dimensions of the whole electrolyser cell stack 100 in parallel to the stacking plane P and are tightened together by tightening means, e.g. bolts 31, as will become apparent later in context of Fig. 5.

The electrolyser cell stack 100 also includes an isolation system 40 comprising isolator plates 44 arranged around current conducting parts of the electrical system 20 for electrically isolating the same. For example, the isolator plates 44 are arranged between an outer side of the bus plates 22, or segments of bus plates 22, and the compression plates 33. In the shown first embodiment of Fig .1, two isolator plates 44 on both sides of stacking direction D, are segmented at the intermediate regions I so that each segment of bus plate 22 is electrically isolated against the respective compression plate 33 by an assigned pair of segments of isolator plate 44.

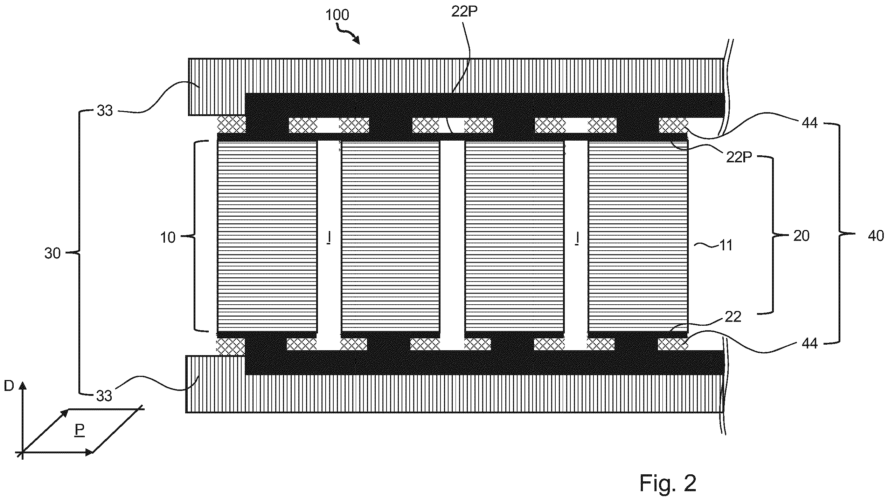

Fig. 2 illustrates a second embodiment of the electrolyser cell stack 100. The second embodiment is identical to the first embodiment of Fig. 1 in all features except for one feature concerning the upper bus plate 22P. The upper bus plate 22P for contacting the sub-stacks 11 on the top side is not segmented but extends in one piece across the substantially same dimensions or area of the compression plate 33, which correspond to the outer dimensions of whole electrolyser cell stack 100. Such one-piece shape spanning across all of the sub-stacks 11 and intermediate regions I can alternatively or additionally be provided on the lower bus plate 22 for contacting the sub-stacks 11 from the bottom side. In case that both of the upper and lower bus plate 22P are not segmented, a parallel connected electrical circuit of all sub-stacks 11 is given, without any options of electrical switching individual sub-stacks 11.

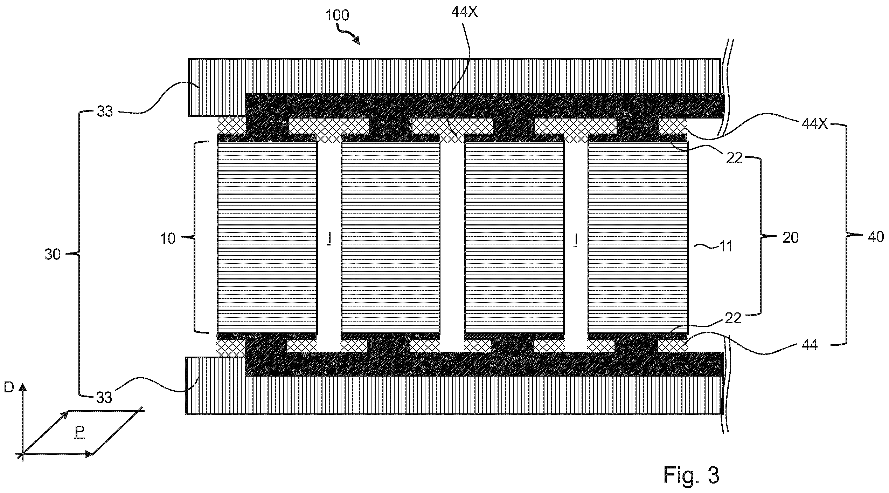

Fig. 3 shows a third embodiment of the electrolyser cell stack 100. The third embodiment is identical to the first embodiment of Fig. 1 in all features except for one feature concerning the upper isolator plate 44X. The upper isolator plate 44X for isolating the upper segments of bus plate 22 on the top side is not segmented but extends in one piece across the substantially same dimensions or area of the compression plate 33, which correspond to the outer dimensions of whole electrolyser cell stack 100. Such one-piece shape spanning across all of the sub-stacks 11 and intermediate regions I can alternatively or additionally be provided on the lower isolator plate 44 for isolating the lower segments of bus plate 22 on the bottom side.

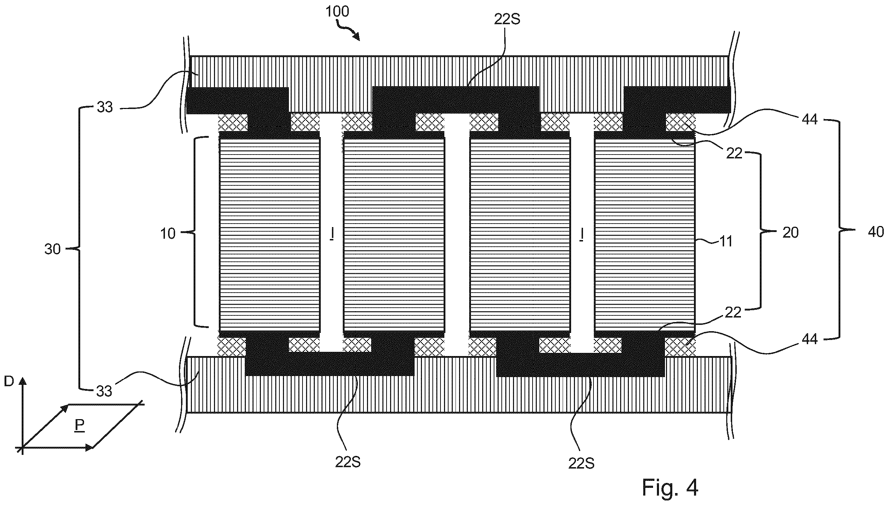

Fig. 4 depicts a fourth embodiment of the electrolyser cell stack 100. The fourth embodiment is identical to the first embodiment of Fig. 1 in all features except for one feature concerning the segmented bus plates 22S, in particular a segmentation pattern or wiring on part of the electrical system 20 for electrical interconnection between the segments of bus plates 22S, that establishes a series connection in the electrical circuit of all sub-stacks 11. The segments of bus plates 22S are each arranged and assigned to electrically connect two adjacently neighbouring sub-stacks 11 on either of the top side or the bottom side. Furthermore, the segments of bus plates 22S are arranged and assigned among each other so that each sub-stack 11 is connected into a first pair with a first adjacent sub-stack 11 by one segment of bus plates 22S on one of the top side or the bottom side, and that the same respective sub-stack 11 is connected into a second pair with a second adjacent sub-stack 11 by another segment of bus plates 22S on the other of the top side or the bottom side. In this way, the arrangement and assignment of the segments of bus plates 22S to the array of sub-stacks 11 forms a chain of electrical connections alternating from the top side to the bottom side and vice versa between adjacent sub-stacks 11, as known for a typical interconnection pattern of a series connected circuitry. The interconnection pattern can be either realized by a shape, arrangement and assignment of segments of bus plates 22S to the array of sub-stacks 11, or by means of dedicated wiring or busbars, as shown in Fig. 4.

This set-up on part of the electrical system 20 enables an operation of the electrolyser cell stack 100 at lower currents and higher voltage in the power supply as compared to a parallel connected circuitry. In case of lower operational currents, current conducting parts of the electrical system 20 may have smaller dimensions than required at higher operational currents.

Fig. 5 shows a top view on a cross-section of an arbitrary one of the foregoing embodiments of the electrolyser cell stack 100. An array of square or rectangular sub-stacks 11 is arranged within a rectangular area A defined by the dimensions of the compression plates 33. The illustration defines intermediate regions I located in-between facing sides of the sub-stacks 11, as well as a surrounding region S which essentially encloses the array of sub-stacks 11. A plurality of tightening means 31, e.g. bolts, are preferably equidistantly arranged within and along the surrounding area S for evenly tightening the depicted lower compression plate 33 and a non-depicted upper compression plate 33 together, so as to compress all components in-between, particularly all sub-stacks 11 in the stacking direction D.

Preferably, a further number of tightening means 31 is positioned in the intermediate regions I. Such bolts in the intermediate regions I of this segmented design advantageously provide structural strength of compression between the sub-stacks 11, thus resulting in that the compression plates 33 to be flatter during compression and providing a more consistently even distribution of compression across all of the sub-stacks 11, particularly compared to a commonly known large single stack design that lacks any bolts inside its active area.

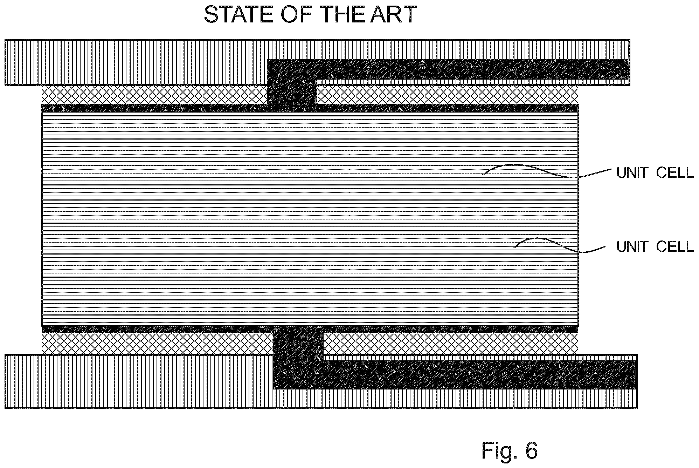

Fig. 6 illustrates an example of a known design for a large-scale electrolyser cell stack in the state of art. Typical for this design is one single stack of electrolyser cells having large dimensions of the unit cell, i.e., the repeating electrolyser cells which are costly and complicated to manufacture, to ship, to install etc. In this design, an area of the unit cell corresponds to the area of the respective compression plates or the outer dimensions of the whole electrolyser cell stack in the stacking plane.

The foregoing explanations of the embodiments describe the present invention solely by way of examples. Of course, individual features of the embodiments can be freely combined with one another, provided this is technically expedient, without departing from the scope of the present invention.

### List of reference characters

- 100: electrolyser cell stack
- 10: electrochemical system
- 11: sub-stack
- 20: electrical system
- 22: segmented bus plate
- 22P: non-segmented bus plate for parallel circuit
- 22S: segmented wired bus plate for serial circuit
- 30: compression system
- 31: tensioning means, e.g. bolts
- 33: compression plate
- 40: isolation system
- 44: isolator plate
- 44X: non-segmented isolator plate

- A: area of compression plate in stacking plane
- D: stacking direction
- I: intermediate region
- P: stacking plane
- S: surrounding region

## Claims

1. Electrolyser cell stack (100) for producing a hydrogen-based e-fuel, comprising:
an electrochemical system (10) having a plurality of electrolyser cells, each electrolyser cell being stacked in a stacking direction (D) and extending in parallel to a stacking plane (P) substantially orthogonal to the stacking direction (D), for an electrochemical reaction of water with electric power;
an electrical system (20) having at least one pair of bus plates (22) extending in parallel to the stacking plane (P), each bus plate (22) being arranged in contact with the electrolyser cells on one of opposing sides in the stacking direction (D), for supplying electric power to the stacked electrolyser cells; and
a compression system (30) having at least one pair of compression plates (33) extending in parallel to the stacking plane (P), each compression plate (33) being arranged outwards of at least the electrochemical system (10) on one of opposing sides in the stacking direction (D), for compressing at least the electrochemical system (10) in the stacking direction (D),
**characterized in that**,
the electrochemical system (10) is divided into at least two parallel stacked sub-stacks (11) of the electrolyser cells arranged within an area (A) of the at least one pair of compression plates (33) in parallel to the stacking plane (P), for a common compression of all of the at least two parallel stacked sub-stacks (11) by the same compression system (30).

2. Electrolyser cell stack (100) according to claim 1, wherein all of the at least two parallel stacked sub-stacks (11) are arranged in a row or in an array of sub-stacks (11) distributed within the area (A) of the at least one pair of compression plates (33) in parallel to the stacking plane (P).

3. Electrolyser cell stack (100) according to claim 1 or 2, wherein a plurality of tensioning means (31) extends between the compression plates (33) in the stacking direction (D), for tightening the compression plates (33) towards each other;
the plurality of tensioning means (31) is arranged in a surrounding region (S) surrounding all of the at least two parallel stacked sub-stacks (11) within the area (A) of the at least one pair of compression plates (33) in parallel to the stacking plane (P); and, preferably,
the plurality of tensioning means (31) is also further arranged in at least one intermediate region (I) formed between adjacently facing sides of the at least two sub-stacks (11) within the area (A) of the at least one pair of compression plates (33) in parallel to the stacking plane (P).

4. Electrolyser cell stack (100) according to any of the previous claims, wherein at least one bus plate (22P) of the at least one pair of bus plates (22) extends across all of the at least two sub-stacks (11) in parallel to the stacking plane (P), for electrically connecting the at least two sub-stacks (11) in parallel on at least one of opposing sides in the stacking direction (D).

5. Electrolyser cell stack (100) according to any of the previous claims, wherein at least one bus plate (22) of the at least one pair of bus plates (22) is segmented, each segment of bus plate (22S) being arranged in contact with one sub-stack (11) of the at least two sub-stacks (11), for individually supplying electric power to the at least two sub-stacks (11).

6. Electrolyser cell stack (100) according to claim 5, wherein the electrical system (20) comprises switchable electrical contacts, each switchable electrical contact being arranged in contact with one or two of the segments of bus plate (22S), for supplying electric power to the at least two sub-stacks (11) in a parallel connection or a series connection.

7. Electrolyser cell stack (100) according to any of claims 1 to 3, wherein the at least one pair of bus plates (22) is segmented, wherein at least two segments of bus plate (22S) being each arranged in contact with two adjacent sub-stacks (11) out of the at least two sub-stacks (11) in alternating order of opposing sides in the stacking direction (D), for electrically connecting the at least two sub-stacks (11) in series.

8. Electrolyser cell stack (100) according to any of the previous claims, further comprising an isolation system (40) having at least one pair of isolator plates (44) extending in parallel to the stacking plane (P), each isolator plate (44) being arranged between at least parts of the electrical system (20) and the electrochemical system (10) and/or between at least parts of the electrical system (20) and the compression system (30) on one of opposing sides in the stacking direction (D), for at least partially electrically isolating the electrical system (20) against parts of the electrolyser cell stack (100).

9. Electrolyser cell stack (100) according to claim 8, wherein at least one isolator plate (44) of the at least one pair of isolator plates (44X) extends across all of the at least two sub-stacks (11) in parallel to the stacking plane (P), for commonly isolating the electrical system (20) against parts of the electrolyser cell stack (100).

10. Electrolyser cell stack (100) according to any of the previous claims, wherein at least one isolator plate (44) of the at least one pair of isolator plates (44) is segmented, each segment of isolator plate (44) being arranged between two adjacent sub-stacks (11) of the at least two sub-stacks (11), for individually isolating the electrical system (20) in regions at each of the at least two sub-stacks (11).
